# EUROPÄISCHE PATENTANMELDUNG

(11) **EP 1 593 451 A1**
(43) Veröffentlichungstag der Anmeldung: **09.11.2005**
(21) Anmeldenummer: 05009066.1
(22) Anmeldetag: 26.04.2005
(51) Int. Cl.: B23K 11/30, G05B 19/416

(54) **Verfahren und Vorrichtung zur sanften Abbremsung von angetriebenen Bewegungseinrichtungen, insbesondere für Fräseinrichtungen zum mechanischen Entfernen von Ablagerungen an Schweisselektroden für das Widerstandsschweissen**

(30) Priorität: 26.04.2004 DE 102004020486
(71) Anmelder: WEDO Werkzeugbau GmbH, 59439 Holzwickede (DE)
(72) Erfinder: Koch, Walter, 59439 Holzwickede (DE); Leiteritz, Olaf, 52399 Merzenich (DE)
(74) Vertreter: Schneider, Uwe

(57) **Zusammenfassung**

Die Erfindung betrifft ein Verfahren zur sanften Abbremsung von angetriebenen Bewegungseinrichtungen, insbesondere für Fräseinrichtungen zum mechanischen Entfernen von Ablagerungen an Schweißelektroden für das Widerstandsschweißen, bei dem die Bewegungseinrichtung einen regelbaren elektrischen Antrieb und eine Bremseinrichtung ohne Bremskraftregelung aufweist. Hierbei kann vor Erreichen einer Sollposition der Bewegungseinrichtung die Bremseinrichtung eingeschaltet werden, der Antrieb der Bewegungseinrichtung jedoch weiterhin derart eingeschaltet bleiben, dass sich die Bewegung der Bewegungseinrichtung gegen die Bremswirkung der Bremseinrichtung verlangsamt fortsetzt, wobei in dieser Bremsphase die Antriebsleistung des elektrischen Antriebes derart entsprechend einem funktionalen Zusammenhang herunter geregelt wird, dass die Bewegungseinrichtung sanft abgebremst genau an der zu erreichenden Sollposition der Bewegungseinrichtung zum Stillstand kommt.

## Beschreibung

Die Erfindung betrifft ein Verfahren und eine Vorrichtung zur sanften Abbremsung von angetriebenen Bewegungseinrichtungen, insbesondere für Fräseinrichtungen zum mechanischen Entfernen von Ablagerungen an Schweißelektroden für das Widerstandsschweißen.

Widerstandsschweißungen werden in einer Vielzahl von Anwendungen im Bereich der Fertigungstechnik eingesetzt und dienen üblicherweise dazu, dünnwandige Metallteile oder dergleichen wie etwa Blechteile miteinander zu verbinden. Hierfür werden von Hand oder etwa auch von mechanisierten oder automatisierten Einrichtungen wie beispielsweise Schweißrobotern entsprechende Schweißzangen an die Verbindungsstellen der Werkstücke heran gebracht und dort so miteinander auf Kontakt gefahren, dass die Werkstücke zu mindestens punktförmig aufeinander liegen. Durch den über die Schweißzangen auf die Werkstücke aufgebrachten Schweißstrom wird das Material des Werkstückes punktuell sehr stark erhitzt und verschweißt bleibend miteinander.

Durch das Schweißverfahren kommt es unweigerlich dazu, dass die Schweißelektroden im Bereich der Berührung mit den Werkstücken im Laufe der Zeit eine Veränderung erfahren, und zwar eine Veränderung sowohl der Form als auch der Materialeigenschaften. Üblicherweise werden für derartige Schweißzangen im Bereich der Berührung mit dem Werkstück Materialien in Form von Elektrodenkappen aus Kupfer und Kupferlegierungen benutzt, die beim Schweißen einem sogenannten Abbrand, also einer Abtragung von Material der Elektroden im Bereich der Berührung mit dem Werkstück unterliegen. Ebenfalls werden die Oberflächen der Elektroden im Bereich der Berührung mit dem Werkstück sich dadurch verändern, dass Material aus den Werkstücken oder durch die Verschweißung entstehender Rückstände wie etwa Schlacken oder dergleichen sich dort anlagern und auch dadurch die Geometrie der entsprechenden Oberflächen der Elektroden verändern. Veränderungen der Elektroden können auch durch Anlegierungen an den Elektrodenoberflächen erfolgen. Derartige Ablagerungen, die beim Schweißen entstehen und sich an der Schweißelektrode vornehmlich im Berührungsbereich ablagern, müssen aber periodisch entfernt werden. Denn für die Erzielung qualitativ hochwertiger Schweißpunkte ist es wichtig, dass die Schweißelektroden besonders in ihrem Kontaktbereich, der mit dem zu schweißenden Werkstück in Berührung kommt, plan oder definiert geformt sind.

Im Bereich etwa der Automobiltechnik oder sonstiger Fertigungsbereiche, in denen eine hohe Zahl von Schweißungen in kurzer Zeit durchgeführt werden muß, ist es von zentraler Bedeutung, dass die Schweißzangen durch die Elektroden in ihrem Kontaktbereich möglichst immer identische Berührung mit den Werkstücken haben und dadurch gleichbleibende Schweißungen ausführen können. Durch die Veränderungen der Schweißzangen in ihrem Kontaktbereich wie vorstehend beschrieben wird aber unweigerlich eine Veränderung der Schweißungen einhergehen, die möglichst zu vermeiden ist. Daher ist es schon seit langem bekannt, anstelle von massiven Schweißelektroden aus dem vorstehend genannten Material Schweißzangen zu verwenden, bei denen im Bereich der Berührung mit den Werkstücken sogenannte Kappen aufgesetzt sind, die aus dem genannten Material bestehen und relativ leicht nach Erreichen einer nicht mehr zulässigen Länge bzw. Wandungsdicke ausgetauscht werden können, um die Reproduzierbarkeit, Zuverlässigkeit und Festigkeit der Schweißpunkte zu gewährleisten.

Derartige Kappen sind häufig näpfchenartige Hohlteile, die über einen entsprechenden Konus auf den Träger der Schweißzangen aufgesetzt werden und somit fest mit der Schweißzange, gleichzeitig aber lösbar verbunden sind. Das Wechseln der Kappen ist ein relativ aufwendiger Vorgang, der darüber hinaus mit einer beträchtlichen Stillstandszeit der Schweißanlage einher geht und daher nur dann vorgenommen werden soll, wenn die Kappe nicht mehr innerhalb des zulässigen Toleranzbereichs liegt. Zur Vermeidung dieser übermäßigen Stillstandszeiten ist es bekannt, die Kappen statt sie auszuwechseln einer formgebenden Bearbeitung zu unterziehen, bei der die den Werkstücken nahen Bereiche der Kappe ähnlich wie bei einem Anspitzer eines Bleistiftes spanend nachbearbeitet werden und daher nach dieser Bearbeitung wieder die geforderten Toleranzen hinsichtlich der Form und der Oberfläche einhalten. Dieses Nachbearbeiten der Kappen erfolgt üblicherweise mit spanenden Werkzeugen, die durch eine Relativbewegung zwischen der Kappe und dem Werkzeug genau wie beim Anspitzer eines Bleistiftes die Oberfläche der Kappe definiert abtragen und dabei Verunreinigungen beseitigen sowie die Ausgangsgeometrie der Kappe in dem Bereich der Schweißpunkte wieder herstellen. Hierzu ist eine Vielzahl von Werkzeugen bekannt, die durch entsprechende Formgebung oder Zusammenwirken mehrerer entsprechender Werkzeuge die Geometrie der Schweißkappe wieder einstellen. Üblicherweise werden Werkzeuge eingesetzt, die als Schneidplatten mit oder ohne Radiusschneide ausgeführt sind.

Das Nachbearbeiten der Kappen erfolgt in Bearbeitungsstationen, die im Arbeitsbereich der Schweißroboter angeordnet sind und die durch die Schweißzangen des Schweißroboters in vorgebbaren Abständen angefahren werden. Die Schweißzangen mit den daran angeordneten Kappen fahren in diese Bearbeitungsstation ein und die Schweißzangen drücken eine oder beide Kappen gegen die Fräsköpfe in der Bearbeitungsstation, die sich angetrieben von elektrischen oder pneumatischen Antrieben mit einer vorgebbaren Drehzahl drehen. Dieses Andrücken der Kappen gegen die Fräsköpfe muß aufgrund technologischer Vorgaben während einer sehr genau einzuhaltenden Zeit und mit einem entsprechenden Anpreßdruck erfolgen, damit die Bearbeitung der Kappen bestimmungsgemäß ausgeführt wird. Es ist in diesem Zusammenhang von großer Bedeutung, dass zur Einhaltung der technologischen Randbedingungen bei dem Nachbearbeiten der Kappen die Drehzahl des Fräskopfes möglichst genau eingehalten wird und darüber hinaus auch erkannt wird, ob durch Fehlfunktionen sich der Fräskopf nicht dreht oder möglicherweise in einem unzulässigen Drehzahlbereich dreht. Daher ist es erforderlich, die Drehbewegung des Fräskopfes laufend zu überwachen und bei Fehlfunktionen oder Abweichungen entsprechend reagieren zu können.

Derartige Fräseinrichtungen werden in vollautomatisierten Bearbeitungsstationen teilweise auch außerhalb des eigentlichen Arbeitsbereiches der Schweißroboter angeordnet, so dass zur Nachbearbeitung einer Schweißzange die Fräseinrichtung soweit in den Arbeitsbereich des Schweißroboters eingeschwenkt werden muß, damit der Schweißroboter die Fräseinrichtung erreichen kann. Hierfür sind Schwenkeinrichtungen bekannt, an denen die Fräseinrichtung angeordnet ist und die außerhalb des Arbeitsbereiches des Schweißroboters angeordnet sind, gleichwohl aber durch eine Schwenkbewegung die Fräseinrichtung in den Arbeitsbereich des Schweißroboters hinein schwenken. Da die Fräseinrichtung mit allen Nebenaggregaten und Zubehörteilen in der Größenordnung von etwa 20 bis 30 Kilogramm wiegt, muß die Schwenkeinrichtung entsprechend belastbar sein, um dieses Gewicht sicher bewegen und positionieren zu können. Verschärft wird dieses Problem durch die großen Hebelarme, die bei solchen Schwenkeinrichtungen notwendig sind und die im Bereich von ein bis zwei Metern Auslegerlänge liegen. Hierdurch ist bei der üblicherweise schnellen Bewegung der Schwenkeinrichtung eine sehr große kinetische Energie zu bewältigen, die auch eine Reihe dynamischer Effekte mit sich bringt.

Es tritt hierbei das Problem auf, dass eine derartige Schwenkeinrichtung ihre Endlage und damit die Bearbeitungsposition, die die Fräseinrichtung zur genauen Positionierung relativ zur Schweißzange einnehmen muß, sehr genau erreichen muß, damit Fertigungsfehler vermieden werden. Da gleichzeitig eine Anforderung nach entsprechend schneller Ausführung der Schwenkbewegung besteht, wird üblicherweise die Verschwenkung mit hohen Drehgeschwindigkeiten ausgeführt. Um gleichwohl eine genaue Endposition für die Fräseinrichtung erreichen zu können, wird üblicherweise die Schwenkeinrichtung durch Endschalter oder Endanschläge in ihrer Endlage positioniert, die mechanisch bei der Ausführung der Schwenkbewegung betätigt werden und eine relativ genaue Aussage über die Position der Schwenkeinrichtung erlauben. Je höher jedoch die Schwenkgeschwindigkeit ist, um so anfälliger ist eine derartige Positionierung gegenüber Fehlern bei der Positionierung bzw. auch dynamischen Effekten durch Vibrationen, Überschwingen und dergleichen.

Immer mehr werden in den Bereichen, in denen Karosserieteile zusammengefügt werden, auch Roboter benützt, die mit einer sogenannten Greiferspinne das oder die Bauteile halten und an eine stationär angeordnete Schweißzange heranführen. Um die Elektroden an der fest installierten Schweißzange zu fräsen, muss die Fräseinrichtung in den Bereich der Schweißzange genau eingeschwenkt werden.

Diese Schwenkbewegungen werden normalerweise elektrisch mit Asynchronmotoren oder mit pneumatischen Zylindern ausgeführt. Für die Positionierung ist es sehr vorteilhaft, wenn vor dem Erreichen der Endlage die kinetische Energie des Schwenkarmes abgebremst wird, gleichzeitig die Endlagen der Bewegung aber immer wieder sicher erreicht werden. Durch den Bremsvorgang werden die üblicherweise verwendeten Endlagenpuffer mechanisch entlastet, wodurch eine größere Haltbarkeit dieser Endlagenpuffer erreicht werden kann. Normalerweise werden zur Geschwindigkeitssteuerung von üblicherweise bürstenlosen Asynchronmotoren Frequenzumrichter erforderlich, die allerdings sehr teuer sind und die Abbremsung der Bewegung damit sehr kostenaufwendig machen.

Es ist daher Aufgabe der vorliegenden Erfindung, ein Verfahren und eine Bewegungseinrichtung zur Positionierung im Hinblick auf die Endposition oder eine beliebige Zwischenposition so weiter zu verbessern, dass die Endposition oder Zwischenposition möglichst genau und ohne Hervorrufen von störenden dynamischen Effekten durch mechanische Schwingungen, Überschwingen oder dergleichen angefahren werden kann.

Die Lösung der erfindungsgemäßen Aufgabe ergibt sich aus den kennzeichnenden Merkmalen des Anspruches 1 in Zusammenwirken mit den Merkmalen des Oberbegriffes. Weitere vorteilhafte Ausgestaltungen der Erfindung ergeben sich aus den Unteransprüchen.

Die Erfindung geht aus von einem Verfahren zur sanften Abbremsung von angetriebenen Bewegungseinrichtungen, insbesondere für Fräseinrichtungen zum mechanischen Entfernen von Ablagerungen an Schweißelektroden für das Widerstandsschweißen, bei dem die Bewegungseinrichtung einen regelbaren elektrischen Antrieb und eine Bremseinrichtung ohne Bremskraftregelung aufweist. Einderartiges gattungsgemäßes Verfahren wird dadurch weiter entwickelt, dass vor Erreichen einer Sollposition der Bewegungseinrichtung die Bremseinrichtung eingeschaltet wird, der Antrieb der Bewegungseinrichtung jedoch weiterhin derart eingeschaltet bleibt, dass sich die Bewegung der Bewegungseinrichtung gegen die Bremswirkung der Bremseinrichtung verlangsamt fortsetzt, wobei in dieser Bremsphase die Antriebsleistung des elektrischen Antriebes derart entsprechend einem funktionalen Zusammenhang herunter geregelt wird, dass die Bewegungseinrichtung sanft abgebremst genau an der zu erreichenden Sollposition der Bewegungseinrichtung zum Stillstand kommt.

Die Grundidee des Verfahrens besteht darin, dass bei derartigen Bewegungseinrichtungen und insbesondere Schwenkeinrichtungen, die üblicherweise mit elektrischen Motoren angetrieben werden, die an der Bewegungseinrichtung vorgesehenen Bremseinrichtungen zur genauen Positionierung der Bewegungseinrichtung auszunutzen. Erläutert werden soll dies am Beispiel einer Schwenkeinrichtung.

Bisher wird beim Annähern an die zu erreichende Position üblicherweise der Antrieb der Schwenkeinrichtung kurz vor Erreichen der Sollposition in seiner Wirkung abgeschaltet und gleichzeitig die Bremse der Schwenkeinrichtung betätigt, so dass die Schwenkeinrichtung relativ abrupt und mit den schon geschilderten Problemen hinsichtlich des dynamischen Verhaltens des Auslegers der Schwenkeinrichtung zum stehen kommt. Durch das Abschalten des Antriebsmotors bei gleichzeitiger Bestätigung der Bremse der Schwenkeinrichtung wird die Schwenkeinrichtung sehr abrupt zum Stillstand kommen, da in der Regel bei derartigen Schwenkeinrichtungen aus Kostengründen nur mit dem Motor direkt verbundene Bremsen verwendet werden. Diese Bremsen werden in der Regel nur zwischen einem Einschaltzustand und einem Ausschaltzustand hin und her geschaltet und können keine gezielte Bremskraft mit Ausnahme der maximal möglichen Bremskraft aufbringen.

Diese Nachteile werden in erfindungsgemäßer Weise dadurch verhindert, dass kurz vor Erreichen der Sollposition bei dem Verfahren zwar die Bremse der Schwenkeinrichtung aktiviert wird und damit die Bewegung der Schwenkeinrichtung abbremst, gleichzeitig aber der Antrieb der Schwenkeinrichtung zu mindestens zu Beginn im wesentlichen bei voller Antriebsleistung eingeschaltet bleibt. Somit arbeiten zu Beginn des Abbremsvorganges der Antrieb der Schwenkeinrichtung und die Bremse der Schwenkeinrichtung gegeneinander, wodurch die Schwenkeinrichtung in ihrer Schwenkbewegung gehemmt, aber nicht abrupt abgebremst wird. Zum sanften Abbremsen der Schwenkeinrichtung wird nun bei aufrechterhaltener Bremswirkung der Bremse die Antriebsleistung des Antriebes der Schwenkeinrichtung entlang eines funktionalen Zusammenhanges herunter geregelt, so dass in der Summe von Wirkung des Antriebes und Wirkung der Bremse der Schwenkeinrichtung die Bremseinrichtung die Schwenkeinrichtung immer mehr abbremst, dieser Bremsvorgang aber sanft verläuft und bei entsprechender Gestaltung des funktionalen Zusammenhanges, beispielsweise einer linear verlaufenden Rampe, genau an der Sollposition zum Stillstand kommt. Da die Bremswirkung der Bremseinrichtung während dieses Abbremsvorganges im wesentlichen konstant bleibt und die Verminderung der Antriebsleistung durch den funktionalen Zusammenhang in weiten Grenzen geregelt werden kann, lässt sich das Abbremsverhalten der Schwenkeinrichtung nahezu optimal an die Erfordernisse anpassen. Es werden damit die störenden dynamischen Effekte verhindert und gleichzeitig die Positioniergenauigkeit der Bewegungseinrichtung verbessert, wozu nahezu keine Änderungen an der Bewegungseinrichtung selbst notwendig werden, sondern lediglich die Steuerung der Bewegungseinrichtung entsprechend modifiziert werden muss.

Denkbar ist es in weiterer Ausgestaltung natürlich auch, dass neben der Verwendung eines linearen Zusammenhangs beim Herunterregeln der Antriebsleistung als funktionaler Zusammenhang ein nicht-linearer Zusammenhang verwendet wird, beispielsweise eine sich stetig oder auch unstetig verändernde Funktion.

Von Vorteil ist es weiterhin auch, wenn die Bremswirkung der Bremseinrichtung während des Herunterregelns der Antriebsleistung solange aufrechterhalten bleibt, bis die Bewegungseinrichtung zum Stillstand gekommen ist. Damit ist ein entsprechend dem gewählten funktionalen Zusammenhang verlaufender sanfter Abbremsvorgang bis zum Stillstand zu erreichen.

Eine andere Ausgestaltung sieht vor, dass die Bremswirkung der Bremseinrichtung während des Herunterregelns der Antriebsleistung solange aufrechterhalten bleibt, bis die Bewegungseinrichtung eine vorgebbare restliche Bewegungsgeschwindigkeit erreicht hat und anschließend die Bewegungseinrichtung mit verringerter Geschwindigkeit und/oder mit verringerter elektrischer Antriebsenergie ohne einwirkende Bremswirkung der Bremseinrichtung die zu erreichende Sollposition der Bewegungseinrichtung anfährt. Hierbei wird die Bremswirkung während des Herunterregelns der Antriebsleistung nicht bis zum endgültigen Stillstand der Schwenkeinrichtung aufrechterhalten, sondern beispielsweise kurz vor Ende der Schwenkbewegung die Bremse wieder gelüftet. Da zu diesem Zeitpunkt die Schwenkbewegung schon weitgehend oder ganz zum Stillstand gekommen ist bzw. die Schwenkeinrichtung sanft wieder anfährt und nur noch geringe Antriebsleistung in die Schwenkeinrichtung eingespeist wird, kann mit dieser geringen Antriebsleistung aufgrund des geringeren Drehmomentes ebenfalls eine genaue Positionierung der Schwenkeinrichtung vorgenommen werden. Die Bremse dient in diesem Fall hauptsächlich dazu den Großteil der kinetischen Energie aus der Schwenkbewegung herauszunehmen, um dann mit einem genauen Einregeln des Antriebsmotors die genaue Endposition zu erreichen.

Denkbar ist es, mit dem erfindungsgemäßen Verfahren lineare Bewegungen auszuführen, selbstverständlich und für die hier vorgeschlagen Anwendung bevorzugt können auch rotatorische und insbesondere kreisförmige Bewegung ausgeführt werden. Ebenfalls vorteilhaft ist es wenn, die rotatorische Bewegung eine Schwenkbewegung ist. In technischen Anwendungen werden häufig derartige rotatorischen oder Schwenkbewegungen ausgeführt, die aufgrund der schnellen Geschwindigkeiten besonders vorteilhaft mit dem erfindungsgemäßen Verfahren hinsichtlich des Anhalteverhaltens beeinflusst werden können.

Denkbar ist es weiterhin, dass zur Erzielung einer Bremswirkung eine Umschaltung des elektrischen Antriebs in den Generatorbetrieb erfolgt. Etwa, wenn in weiterer Ausgestaltung der elektrische Antrieb bei gleichzeitigem sanften Steigern der dem elektrischen Antrieb zugeführten elektrischen Energie umgepolt wird, lässt sich die Bremswirkung aufgrund der Drehmomenteinflüsse des Generatorbetriebes ein besonders sanftes Abbremsen realisieren, z.B. dadurch, dass durch Umpolen des Motors mit gleichzeitigem sanften Anfahren der elektrischen Energie die Bewegung sanft gebremst werden kann. Durch Überwachung der Bewegung (insbesondere im Hinblick auf die Geschwindigkeit) kann eine Regelung aufgebaut werden, die nach einer vorgegebenen Geschwindigkeitsfunktion die Bewegung steuert. Insofern wird die Bewegung durch eine sanft anfangende Gegenkraft gebremst, die entweder elektrischer, pneumatischer oder mechanischer Natur ist. Grundlage der Ausgestaltung ist es, dass diese Gegenkraft nicht abrupt wirken darf.

Die Erfindung betrifft weiterhin eine Vorrichtung zur Durchführung eines Verfahrens gemäß Anspruch 1, bei dem die Bewegungseinrichtung einen regelbaren elektrischen Antrieb und eine Bremseinrichtung ohne Bremskraftregelung aufweist, bei der die Bremseinrichtung und der Antrieb nach Einschaltung der Bremseinrichtung und Zuführung des elektrischen Antriebs gegeneinander arbeiten und dabei kinetische Energie der Bewegung der Bewegungseinrichtung kontrolliert abbauen.

Bei einer derartigen Vorrichtung kann die Steuerung des Abbaus der kinetischen Energie der Bewegung der Bewegungseinrichtung in einer Elektronik innerhalb des elektrischen Antriebes integriert sein. Weiterhin kann bei der Vorrichtung die Bremseinrichtung als eine mechanisch wirkende Bremseinrichtung oder auch als eine Wirbelstrombremse ausgebildet sein.

Es versteht sich von selbst, dass die vorstehend beschriebene Erfindung für beliebige Anwendungszwecke und nicht nur für die Verschwenkung von Einrichtungen zum Fräsen von Schweißzangen genutzt werden. Auch kann der funktionale Zusammenhang beim Herunterregeln nahezu beliebig ausgestaltet werden, um entsprechende Bewegungscharakteristika der Bewegungseinrichtung zu erreichen. Weiterhin kann die Aufbringung der Bremswirkung nicht nur mechanisch, sondern auch auf andere bekannte Arten wie beispielsweise durch Wirbelstrombremsen oder auch durch intermittierende, kurzzeitige Umschaltung des Motors in den Generatorbetrieb oder auch auf andere bekannte Arten erfolgen. Denkbar ist es auch, dass die Bremseinrichtung eine pneumatische Bremseinrichtung, vorzugsweise ein Luftdämpfer ist, gegen den der elektrische Antrieb arbeitet.

## Patentansprüche

1. Verfahren zur sanften Abbremsung von angetriebenen Bewegungseinrichtungen, insbesondere für Fräseinrichtungen zum mechanischen Entfernen von Ablagerungen an Schweißelektroden für das Widerstandsschweißen, bei dem die Bewegungseinrichtung einen regelbaren elektrischen Antrieb und eine Bremseinrichtung ohne Bremskraftregelung aufweist,
**dadurch gekennzeichnet, dass**
vor Erreichen einer Sollposition der Bewegungseinrichtung die Bremseinrichtung eingeschaltet wird, der Antrieb der Bewegungseinrichtung jedoch weiterhin derart eingeschaltet bleibt, dass sich die Bewegung der Bewegungseinrichtung gegen die Bremswirkung der Bremseinrichtung verlangsamt fortsetzt, wobei in dieser Bremsphase die Antriebsleistung des elektrischen Antriebes derart entsprechend einem funktionalen Zusammenhang herunter geregelt wird, dass die Bewegungseinrichtung sanft abgebremst genau an der zu erreichenden Sollposition der Bewegungseinrichtung zum Stillstand kommt.

2. Verfahren gemäß Anspruch 1, **dadurch gekennzeichnet, dass** als funktionaler Zusammenhang zur Regelung der Antriebsleistung des Antriebes ein linearer Zusammenhang verwendet wird.

3. Verfahren gemäß Anspruch 1, **dadurch gekennzeichnet, dass** als funktionaler Zusammenhang zur Regelung der Antriebsleistung des Antriebes ein nicht-linearer Zusammenhang verwendet wird.

4. Verfahren gemäß einem der vorstehenden Ansprüche, **dadurch gekennzeichnet, dass** die Bremswirkung der Bremseinrichtung während des Herunterregelns der Antriebsleistung solange aufrechterhalten bleibt, bis die Bewegungseinrichtung zum Stillstand gekommen ist.

5. Verfahren gemäß einem der Ansprüche 1 bis 3, **dadurch gekennzeichnet, dass** die Bremswirkung der Bremseinrichtung während des Herunterregelns der Antriebsleistung solange aufrechterhalten bleibt, bis die Bewegungseinrichtung eine vorgebbare restliche Bewegungsgeschwindigkeit und anschließend die Bewegungseinrichtung mit verringerter Geschwindigkeit und/oder mit verringerter elektrischer Antriebsenergie ohne einwirkende Bremswirkung der Bremseinrichtung die zu erreichende Sollposition der Bewegungseinrichtung anfährt.

6. Verfahren gemäß einem der vorstehenden Ansprüche, **dadurch gekennzeichnet, dass** als Bewegung der Bewegungseinrichtung eine lineare Bewegung ausgeführt wird.

7. Verfahren gemäß einem der Ansprüche 1 bis 5, **dadurch gekennzeichnet, dass** als Bewegung der Bewegungseinrichtung eine rotatorische, insbesondere eine kreisförmige Bewegung ausgeführt wird.

8. Verfahren gemäß Anspruch 7, **dadurch gekennzeichnet, dass** als Bewegung der Bewegungseinrichtung eine Schwenkbewegung ausgeführt wird.

9. Verfahren gemäß einem der vorstehenden Ansprüche, **dadurch gekennzeichnet, dass** zur Erzielung einer Bremswirkung eine Umschaltung des elektrischen Antriebs in den Generatorbetrieb erfolgt.

10. Verfahren gemäß einem der vorstehenden Ansprüche, **dadurch gekennzeichnet, dass** zur Erzielung einer Bremswirkung der elektrische Antrieb bei gleichzeitigem sanften Steigern der dem elektrischen Antrieb zugeführten elektrischen Energie umgepolt wird.

11. Vorrichtung zur Durchführung eines Verfahrens gemäß Anspruch 1, bei dem die Bewegungseinrichtung einen regelbaren elektrischen Antrieb und eine Bremseinrichtung ohne Bremskraftregelung aufweist,
**dadurch gekennzeichnet, dass**
die Bremseinrichtung und der Antrieb nach Einschaltung der Bremseinrichtung und Zuführung des elektrischen Antriebs gegeneinander arbeiten und dabei kinetische Energie der Bewegung der Bewegungseinrichtung kontrolliert abbauen.

12. Vorrichtung gemäß Anspruch 11, **dadurch gekennzeichnet, dass** die Steuerung des Abbaus der kinetischen Energie der Bewegung der Bewegungseinrichtung in einer Elektronik innerhalb des elektrischen Antriebes integriert ist.

13. Vorrichtung gemäß einem der Ansprüche 11 oder 12, **dadurch gekennzeichnet, dass** die Bremseinrichtung eine mechanisch wirkende Bremseinrichtung ist.

14. Vorrichtung gemäß einem der Ansprüche 11 oder 12, **dadurch gekennzeichnet, dass** die Bremseinrichtung eine Wirbelstrombremse ist.

15. Vorrichtung gemäß einem der Ansprüche 11 oder 12, **dadurch gekennzeichnet, dass** die Bremseinrichtung eine pneumatische Bremseinrichtung, vorzugsweise ein Luftdämpfer ist.
